Europäisches Patentamt

European Patent Office

Office européen des brevets

(19)

(11) **EP 1 057 086 B1**

(12) **FASCICULE DE BREVET EUROPEEN**

(45) Date de publication et mention
de la délivrance du brevet:
**14.07.2004 Bulletin 2004/29**

(21) Numéro de dépôt: **99959495.5**

(22) Date de dépôt: **17.12.1999**

(51) Int Cl.⁷: **G05D 1/02**

(86) Numéro de dépôt international:
**PCT/FR1999/003188**

(87) Numéro de publication internationale:
**WO 2000/039650 (06.07.2000 Gazette 2000/27)**

(54) **PROCEDE DE ROUTAGE HORIZONTAL D'UN AERONEF ENTRE DEUX POINTS DE PASSAGE OBLIGES**

VERFAHREN ZUR HORIZONTALEN LEITWEGLENKUNG EINES FLUGZEUGES ZWISCHEN ZWEI VERPFLICHTETEN PUNKTEN

METHOD FOR HORIZONTAL ROUTING OF AN AIRCRAFT BETWEEN TWO WAYPOINTS

(84) Etats contractants désignés:
**DE ES FR GB IT SE**

(30) Priorité: **23.12.1998 FR 9816354**

(43) Date de publication de la demande:
**06.12.2000 Bulletin 2000/49**

(73) Titulaire: **THALES AVIONICS S.A.**
**78141 Vélizy Villacoublay Cédex (FR)**

(72) Inventeurs:
• **BONHOURE, F. Thomson-CSF Prop. Int.**
**Dép. Brevets**
**94117 Arcueil Cedex (FR)**

• **INGLESE, F. Thomson-CSF Prop. Int.**
**Dép. Brevets**
**94117 Arcueil Cedex (FR)**

(74) Mandataire: **Beylot, Jacques**
**THALES Intellectual Property**
**31-33 avenue Aristide Briand**
**94117 Arcueil Cédex (FR)**

(56) Documents cités:
EP-A- 0 762 252          FR-A- 2 749 686
US-A- 5 646 854          US-A- 5 774 818

**Description**

La présente invention concerne la détermination d'une trajectoire horizontale à suivre par un aéronef pour aller d'un point de passage obligé à un autre tout en respectant des contraintes imposées par des consignes de rayon de virage et des consignes de direction d'approche en route ou cap, à tenir aux points de passages obligés.

Jusqu'à présent, comme indiqué dans le brevet américain US5,774,818 qui s'intéresse plus particulièrement a une prise en compte de la rotondité de la terre dans le suivi par un aéronef d'une phase de vol à cap constant sur de grandes distances, la trajectoire horizontale à suivre au cours d'une mission est construite à partir d'une ligne brisée passant par les points de passages obligés, avec entre les segments rectilignes de trajectoire parcourus selon une route ou un cap constant, des portions de virage. Cette ligne brisée n'est pas choisie au hasard mais en fonction de critères classiques d'optimisation de la longueur de la trace au sol et des possibilités manoeuvrières de l'aéronef. Ce choix et donc la construction de la trajectoire horizontale à suivre au cours d'une mission nécessitent actuellement des moyens de calcul important que l'on ne trouve pas encore à bord des aéronefs. La trajectoire horizontale à suivre est donc calculée par des moyens situés au sol, au moment de la préparation d'une mission.

Une fois définie au sol, la trajectoire horizontale à suivre au cours d'une mission a ses éléments, à savoir la succession de segments rectilignes et de portions de virage qui la compose ainsi que les vitesses de consigne imposées pour les parcours de chacun des segments rectilignes et des portions de virage, mis en forme pour pouvoir être exploités par le système de gestion de vol de l'aéronef.

Un segment rectiligne est défini par les coordonnées géographiques de ses extrémités et éventuellement par une direction d'orientation en route ou cap tandis que les portions de virage sont définies par un centre et un rayon de courbure.

Pour le suivi de la trajectoire horizontale de consigne, le système de gestion de vol d'un aéronef, compare en permanence la position géographique réelle de l'aéronef, telle qu'elle ressort des mesures de localisation issues du traitement des informations provenant de sa centrale inertielle et/ou d'appareils de localisation tels que des systèmes de localisation par satellites ou autres, avec la position géographique qu'il est sensé avoir sur la trajectoire horizontale de consigne. Il déduit de ces comparaisons un écart latéral et un écart de route, et traduit ces deux écarts au moyen d'une table d'équivalence à deux entrées : écart latéral et écart de route, en ordres de commande appliqués aux gouvernes par l'intermédiaire du système des commandes de vol de l'aéronef.

Une telle façon de faire présente des inconvénients, dans la mesure où, au cours d'une mission, il n'est pas rare qu'un aéronef ait à modifier son plan de vol par suite d'événements imprévus, par exemple une panne ou l'apparition d'une zone dangereuse sur la trajectoire suivie. La nouvelle trajectoire à suivre, qui est différente de celle initialement prévue, n'a pas été préalablement préparée ni mise en forme pour être traitée par le système de gestion de vol de l'aéronef qui ne peut alors pas être utilisé. Le pilote doit donc reprendre le contrôle des commandes de vol pour suivre lui-même une nouvelle trajectoire permettant de résoudre le problème résultant de l'apparition de l'événement.

Pour décharger le pilote de la tâche de pilotage, même dans le cas de situations imprévues, on a déjà proposé d'équiper les aéronefs d'un calculateur supplémentaire capable de lui proposer de nouvelles trajectoires permettant de résoudre le problème posé. Toutefois, un tel équipement s'avère très coûteux, et ne répond pas totalement au besoin du pilote, du fait qu'il présente un temps de réponse important, souvent incompatible avec les temps de réaction qui s'imposent à un pilote d'aéronef. En outre, les trajectoires proposées répondent souvent mal au problème posé, manquent de précision, et ne sont pas directement exécutables par le système de gestion de vol, le pilote devant lui-même assurer le contrôle des commandes de vol, en suivant les instructions relatives à la trajectoire proposée, qui lui sont fournies.

De plus, la reprise du cours normal de la mission suppose que le pilote rallie la trajectoire de consigne initialement prévue, sans l'aide du système de gestion de vol qui ne peut corriger automatiquement, qu'un faible l'écart de position.

Les modifications de trajectoire en cours de mission, lors d'un déroutement non prévisible, qui peuvent être très variables pour une même situation puisque laissées entièrement à l'initiative du pilote et qui ne sont pas présentées sous une forme directement exploitable par le système de navigation de l'aéronef nuisent à la précision du minutage de la mission car elles provoquent des avances ou des retards difficilement appréciables avec précision par le pilote qui ne peut alors que les compenser imparfaitement. En outre, la forte éventualité de modifications imprévues de la trajectoire suivie en cours de mission oblige à prendre une importante marge de sécurité sur la quantité de carburant embarquée, ce qui se fait au détriment de la capacité d'emport de l'aéronef.

La présente invention a pour but de supprimer ces inconvénients.

Elle a également pour but de faciliter la tâche du pilote en le déchargeant des problèmes de navigation liés à un déroutement imprévu au profit du système de gestion de vol de l'aéronef. A cet effet, on propose un procédé de routage peu exigeant en puissance de calcul qui peut être exécuté par le système de gestion de vol de l'aéronef à chaque déroutement pour mettre à jour la trajectoire à suivre et intégrer immédiatement dans le plan de vol les modifications apportées à la trajectoire afin que le système de navigation puisse en tenir compte en temps réel et maintenir par lui-même la précision du minutage de la mission après ralliement de la trajectoire de consigne, en jouant sur la vitesse de l'aéronef dans la période précédent ce ralliement.

L'invention a pour objet un procédé de routage horizontal d'un aéronef entre deux points de passage obligés respectant les contraintes imposées par des consignes de rayon de virage et par des consignes d'orientation en route ou cap à tenir aux points de passage obligés.

Selon l'invention, ce procédé est caractérisé en ce qu'il consiste :

- à déterminer deux cercles dits de ralliement, tangents au point de passage obligé de départ dit point initial selon la direction de la consigne d'orientation en route ou cap en ce point initial dite sens de la route initiale, orientés selon cette direction donc avec des sens de parcours inverses, et ayant un rayon correspondant à une consigne de rayon de virage au point initial,

- à déterminer deux cercles dits de capture, tangents au point de passage obligé d'arrivée dit point final selon la direction de la consigne d'orientation en route ou cap en ce point final dite sens de la route finale, orientés selon cette direction donc avec des sens de parcours inverses, et ayant un rayon correspondant à une consigne de rayon de virage au point final,

- à repérer celui des deux cercles de capture, dit premier cercle de capture, qui est situé du même côté de la route partant du point final et orientée selon une consigne d'orientation route à tenir au point final dite route finale, que le point initial,

- à sélectionner l'un des cercles de ralliement et l'un des cercles de capture comme supports de la trajectoire en fonction de la position du point initial par rapport au premier cercle de capture

- à définir une trajectoire comportant trois portions :

  - une première portion constituée d'un virage circulaire initial de ralliement de la direction générale du point final, entamé en partant du point initial avec la direction de la consigne d'orientation de route initiale et poursuivi en décrivant une partie du contour du cercle de ralliement sélectionné en respectant son sens de parcours,
  - une deuxième portion constituée d'une ligne droite de ralliement à route constante suivant une tangente au cercle de ralliement sélectionné pour le virage circulaire initial et au cercle de capture sélectionné, ladite tangente étant orientée en direction du point final et dans le sens de chacun des cercles aux points de tangence et
  - une troisième portion constituée d'un virage circulaire de capture final empruntant le contour du cercle de capture sélectionné atteint en fin de la ligne droite de ralliement, en respectant son sens de parcours, jusqu'au point final atteint avec la direction de la consigne d'orientation de route finale, et

- à faire suivre par l'aéronef la trajectoire ainsi définie.

Grâce à ces dispositions, la trajectoire recherchée est obtenue par un nombre minimum de calculs, tenant compte de toutes les situations possibles de positions des points initial et final et de route. Ce procédé permet en outre de sélectionner la trajectoire la plus courte avant de la calculer. Il en résulte que ce procédé peut tout à fait être appliqué à la détermination en temps réel de trajectoire. La trajectoire ainsi calculée est obtenue en tenant compte des possibilités de manoeuvre de l'aéronef. Elle permet donc le survol précis des points initial et final avec les caps prévus.

Généralement, les dispositifs de pilotage automatiques sont conçus pour exécuter des phases de lignes droites et de virages à rayon constant, la trajectoire obtenue par ce procédé est donc tout à fait adaptée pour alimenter un tel dispositif.

Selon une particularité de l'invention, le procédé applique la convention selon laquelle le premier cercle de ralliement est celui qui a le même sens de parcours que le premier cercle de capture. Grâce à cette convention, le cercle de capture C1 sera sélectionné dans la plupart des cas.

Le procédé comprend la sélection du premier cercle de ralliement si le point initial se trouve dans le premier cercle de capture, et la sélection du premier cercle de capture si le premier cercle de ralliement n'intercepte pas la route finale passant par le point final, ou intercepte le second cercle de capture, et la sélection du second cercle de capture si le premier cercle de ralliement intercepte la route finale, mais pas le second cercle de capture.

Le procédé selon l'invention permet ainsi de satisfaire aux conditions de route et de point de passage même si le point final est très proche du point initial, compte tenu des possibilités de manoeuvre de l'aéronef.

Il est à noter que dans ce cas, la sélection des cercles de ralliement et de capture est effectuée en faisait appel à des calculs géométriques simples et peu coûteux en temps de calcul.

Selon une autre particularité de l'invention, le procédé comprend la sélection a priori du premier cercle de capture si le point initial ne se trouve pas dans le premier cercle de capture.

Selon une autre particularité de l'invention, le procédé comprend la sélection du premier cercle de ralliement et du premier cercle de capture si la condition suivante est remplie :

- le point initial ne se trouve pas dans le premier cercle de capture, et
- le second cercle de ralliement intercepte le premier cercle de capture.

Dans le cas où le point initial ne se trouve pas dans le premier cercle de capture, et le second cercle de ralliement n'intercepte pas le premier cercle de capture, le cercle de ralliement est sélectionné en fonction de la route initiale et de la route dirigée suivant la tangente au premier cercle de capture, passant par le point initial.

Selon une autre particularité de l'invention, si la condition suivante est remplie :

- le point initial se trouve en amont du point final, et en dehors du premier cercle de capture, et
- le premier cercle de ralliement intercepte la route finale, mais pas le second cercle de capture,

le procédé comprend la sélection du premier cercle de ralliement et du second cercle de capture, ou du second cercle de ralliement et du premier cercle de capture.

Dans ce cas, la sélection de l'une ou l'autre combinaison est effectuée suivant que le premier cercle de ralliement a été ou non précédemment sélectionné.

De cette manière, par des tests peu coûteux en puissance de calcul, le procédé selon l'invention permet de sélectionner le cercle de ralliement et le cercle de capture à utiliser pour déterminer la trajectoire recherchée. Il permet en outre de limiter les cas où l'on doit effectuer des calculs de tangente plus coûteux.

Un mode de réalisation du procédé selon l'invention sera décrit ci-après, à titre d'exemple non limitatif, avec référence aux dessins annexés dans lesquels

La figure 1 représente schématiquement l'équipement électronique embarqué à bord d'un aéronef et permettant de mettre en oeuvre le procédé selon l'invention;

La figure 2 montre deux buts ou points de passage contraints en route entre lesquels le procédé selon l'invention détermine une trajectoire ;

Les figures 3a à 3i illustrent différents cas de positions respectives de buts initial et final et de direction de routes initiale et finale, pris en compte par le procédé selon l'invention ;

La figure 4 représente sous la forme d'un organigramme les différentes étapes du procédé selon l'invention.

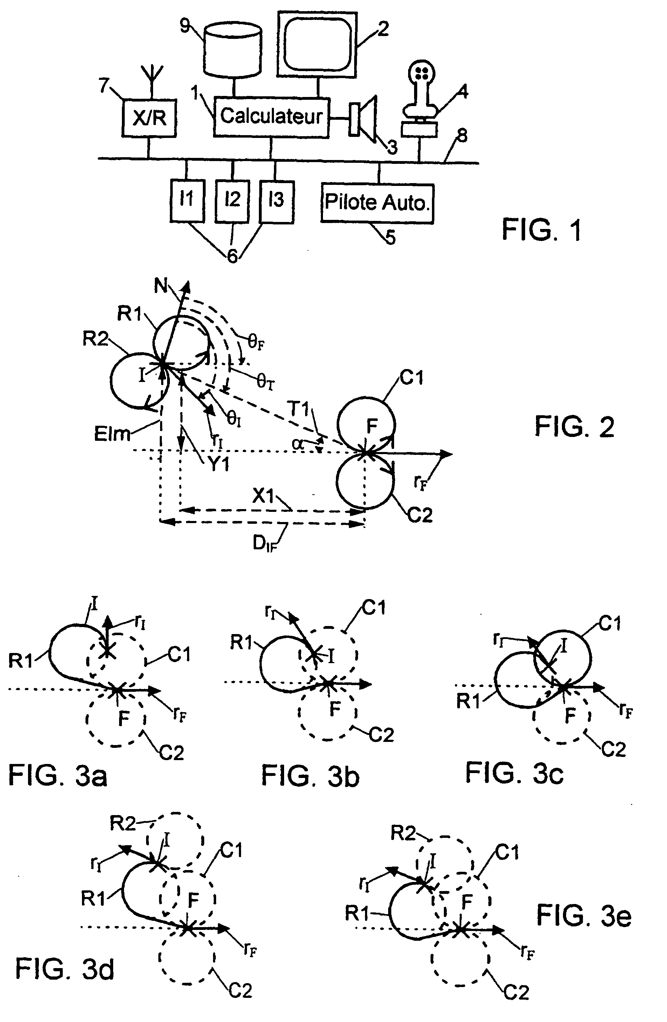

Le procédé selon l'invention est particulièrement adapté pour être mis en oeuvre par les équipements électroniques embarqués à bord d'un aéronef. Tel que représenté sur la figure 1, ces équipements comprennent un calculateur 1 connecté à un ou plusieurs écran de visualisation 2, une mémoire de masse 9. Ce calculateur 1 est relié par exemple par un réseau de transmission de données 8, les bus de l'aéronef, aux capteurs et instruments de vol 6 embarqués, aux commandes de pilotage 4, à un dispositif de pilotage automatique 5 et à dispositif de transmission de données numériques 7, par exemple de type "data link". De cette manière, le calculateur 1 peut acquérir en temps réel les données émanant des autres équipements électroniques embarqués, à savoir notamment, la position géographique de l'aéronef, son altitude, sa vitesse et son état.

Le dispositif de pilotage automatique comprend une mémoire dans laquelle est enregistrée la trajectoire en cours, suivie par l'aéronef, cette trajectoire étant constituée d'une succession de segments de droite entre un point de départ et un point de destination, ces segments étant reliés par des arcs de cercles.

La mémoire de masse 9 contient les caractéristiques de l'aéronef, et en particulier les données définissant ses possibilités de manoeuvres, tel que le rayon minimum de virage en fonction de la vitesse, ainsi que toutes les données relatives à la mission. Le rayon minimum de virage peut aussi être donné par le facteur de charge maximum admissible par le pilote en mode de pilotage automatique.

Les données de mission comprennent notamment :

- des données cartographiques permettant au calculateur 1 d'afficher sur l'écran 2 l'image d'une carte géographique de la zone survolée durant la mission,
- des données relatives à la navigation, par exemple la position géographique et les caractéristiques des radiobalises et des aérodromes accessibles par l'aéronef durant la mission,
- les données relatives à la trajectoire prévue, permettant au calculateur d'afficher sur l'écran cette trajectoire en surimpression sur l'image de la carte,

- la position et l'étendue d'éventuelles zones dangereuses à éviter, et
- les conditions météorologiques prévues durant la mission dans la zone survolée.

Les données relatives à la trajectoire prévue comprennent la position des points de passage imposés associés à une heure de rendez-vous, et une altitude de survol.

Toutes ces données peuvent être modifiées à tout instant, soit directement par le pilote ou les capteurs et instruments embarqués, soit par des informations reçues par la liaison radio. Il apparaît donc souhaitable de pouvoir déterminer en temps réel une nouvelle trajectoire. Cette détermination peut se ramener à une succession de calculs de segments de trajectoire, délimités par un point initial I et un point final F, associés respectivement à une route initiale $r_I$ et une route finale $r_F$. Les routes initiale $r_I$ et finale $r_F$ sont des axes orientés passant respectivement par les points I et F, et forment des angles de route initiale $\theta_I$ et finale $\theta_F$ repérés par rapport à la direction du Nord N entre -180° et +180°, et sont croissants dans le sens des aiguilles d'une montre (figure 2).

Selon l'invention, le point initial I est associé à deux cercles de ralliement R1 et R2 tangents en I à la route initiale $r_I$, et ayant un rayon $r_R$ correspondant au rayon de virage de ralliement envisagé de l'aéronef. De même, le point final F est associé à deux cercles de capture C1 et C2 tangents en F à la route finale $r_F$ et ayant un rayon $r_C$ correspondant au rayon de virage de capture envisagé de l'aéronef. Chaque cercle de capture ou de ralliement est associé à un sens de parcours déterminé par les sens respectifs des routes initiale $r_I$ et finale $r_F$.
En outre, on applique la convention selon laquelle le premier cercle de capture C1 est placé du même côté de la route finale $r_F$ passant par le point final F, que le point initial I, de sorte que le cercle C1 sera le cercle de capture préféré. Le premier cercle de ralliement R1 est celui qui est parcouru dans le même sens que le premier cercle de capture C1, compte tenu des sens respectifs de $r_I$ et $r_F$.

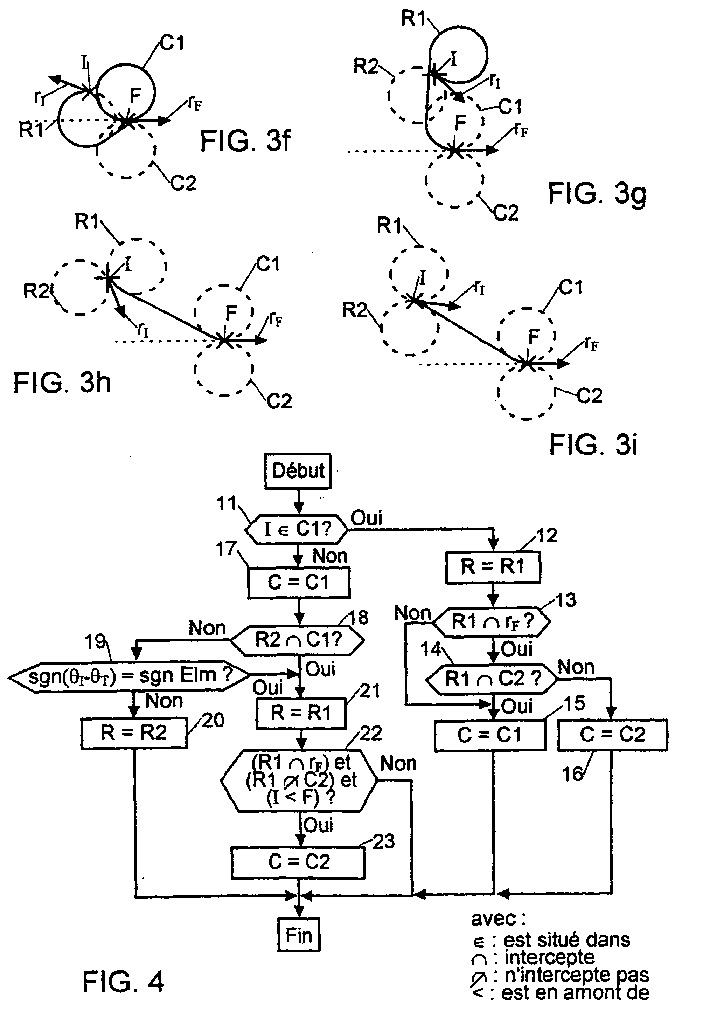

Les figures 3a à 3i représentent différents exemples de configuration des points I et F et des routes $r_I$ et $r_F$. Sur ces figures, les cercles de ralliement R1, R2 et de capture C1, C2 sont montrés en traits interrompus, tandis que la trajectoire qui est choisie et calculée est indiquée en trait plein.

Sur la figure 4 qui représente les différentes étapes du procédé selon l'invention, exécuté par le calculateur 1, la première étape 11 consiste à déterminer si le point initial I se trouve ou non dans le cercle de capture C1.

A cet effet, on calcule la distance $\Delta$ entre le point initial et le point de tangence au cercle C1 de la tangente T1 à ce cercle passant par le point I à l'aide de l'équation suivante :

$$\Delta^2 = (Elm - sgn(Elm) \cdot r_C)^2 + D_{IF}^2 - r_C^2 \tag{1}$$

dans laquelle :

Elm est l'écart latéral métrique ou la distance signée entre le point initial I et l'axe orienté $r_F$ passant par le point final F et ayant la direction de la route finale $r_F$, Elm étant choisi positif lorsqu'il est situé à gauche de l'axe $r_F$, sgn (Elm) = 1 lorsque Elm $\geq$ 0, et sgn(Elm) = -1 dans le cas contraire,
$D_{IF}$ est la distance entre le point I et le point F, projetée sur la route finale $r_F$, et $r_C$ le rayon des cercles de capture.

Si $\Delta^2$ est négatif, cela signifie que le point I se trouve à l'intérieur du cercle de capture C1. Dans ce cas, le cercle R1 est choisi comme cercle de ralliement (étape 12). Le cercle de capture est ensuite déterminé selon que le cercle de ralliement R1 intercepte ou non la route finale $r_F$ passant par le point F (étape 13), et intercepte ou non le cercle de capture C2 (étape 14).

La condition de l'étape 13 est vérifiée en calculant la quantité suivante :

$$Y1 = |Elm| - r_R \cdot (1 - \cos(\theta_I - \theta_F)) \tag{2}$$

dans laquelle $r_R$ est le rayon des cercles de ralliement R1, R2, et $|Elm|$ la valeur absolue de la distance signée Elm.

La condition de l'étape 14 est vérifiée en calculant la distance L1 entre les centres des cercles R1 et C2, par les formules suivantes :

$$X1 = D_{IF} - sgn(Elm) \cdot r_R \cdot \sin(\theta_I - \theta_F) \tag{3}$$

$$L1^2 = X1^2 + (Y1 + r_R + r_C)^2 \qquad (4)$$

Si le cercle R1 n'intercepte pas la route finale $r_F$, c'est-à-dire $Y1 \geq 0$, ou intercepte le cercle C2 (donc également la route finale $r_F$), c'est-à-dire $L1^2 \leq (r_R + r_C)^2$, le cercle de capture choisi est le cercle C1 (étape 15). Dans le cas contraire, c'est-à-dire, si le cercle R1 intercepte la route finale $r_F$ ($Y1 < 0$), mais pas le cercle C2 ($L1^2 > (r_R + r_C)^2$), le cercle de capture choisi est le cercle C2 (étape 16).

Ces trois cas sont illustrés respectivement par les figures 3a à 3c, dans lesquelles les trajectoires à calculer comprennent des arcs de cercles appartenant au premier cercle de ralliement R1 et respectivement aux cercles de capture C1 (cas des figures 3a et 3c) ou C2 (cas de la figure 3b), ainsi qu'un segment de trajectoire à route constante tangent au cercle de ralliement R1 et au cercle de capture C1 ou C2 sélectionné.

Dans la seconde branche de l'organigramme représenté sur la figure 4, correspondant au cas où le point initial I ne se trouve pas dans le premier cercle de capture C1 ($\Delta^2 > 0$), on choisit a priori de cercle C1 comme cercle de capture (étape 17). A l'étape 18, on détermine si le second cercle de ralliement R2 intercepte ou non le premier cercle de capture C1. A cet effet, on calcule les valeurs suivantes :

$$X2 = D_{IF} + sgn(Elm) \cdot r_R \cdot \sin(\theta_I - \theta_F) \qquad (5)$$

$$Y2 = |\,Elm\,| - sgn(Elm) \cdot r_R \cdot (1 + \cos(\theta_I - \theta_F)) \qquad (6)$$

$$L2^2 = X2^2 + (Y2 + sgn(Elm) \cdot (r_R - r_C))^2 \qquad (7)$$

Si le cercle R2 intercepte le cercle C1 ($L2^2 \leq (r_R + r_C)^2$), on choisit le premier cercle de ralliement R1 (étape 21). Ce cas est par exemple illustré par la figure 3g.

Dans le cas contraire ($L2^2 > (r_R + r_C)^2$), on examine à l'étape 19 le signe de l'écart ($\theta_I - \theta_T$), ramené entre $-180°$ et $+180°$, entre l'angle de route initiale $\theta_I$ et l'angle $\theta_T$ de la route tangente T1 au cercle C1, passant par le point initial I.

A cet effet, l'angle de route $\theta_T$ est obtenu en fonction de l'angle de route finale $\theta_F$ par les équations suivantes :

$$\sin\alpha = \frac{Elm - sgn(Elm) \cdot r_C \cdot (1 - \cos\alpha)}{\Delta} \qquad (8)$$

$$\cos\alpha = \frac{D_{IF} - sgn(Elm) \cdot r_C \cdot \sin\alpha}{\Delta} \qquad (9)$$

avec $\alpha = \theta_T - \theta_F$.
Il en résulte que:

$$\alpha = a\tan\left(\frac{r_C \cdot D_{IF} + \Delta \cdot sgn(Elm) \cdot (Elm - sgn(Elm) \cdot r_C)}{\Delta \cdot sgn(Elm) \cdot D_{IF} - r_C \cdot (Elm - sgn(Elm) \cdot r_C)}\right) \qquad (10)$$

atan étant la fonction arctangente, et l'angle $\alpha$ étant calculé entre $-180°$ et $+180°$ en tenant compte des signes respectifs de $\sin\alpha$ et $\cos\alpha$.

Si l'écart de route ($\theta_I - \theta_T$) est du même signe que Elm, ce qui correspond par exemple aux cas illustrés par les figures 3d et 3h, on choisit le cercle de ralliement R1 (étape 21). Dans le cas contraire, c'est le cercle R2 qui est choisi (étape 20), comme cela est illustré sur la figure 3i.

Le traitement effectué aux étapes 19 à 21 revient à sélectionner le cercle de ralliement correspondant à un virage à gauche si l'écart de route ($\theta_I - \theta_T$) est positif, et le cercle de ralliement correspondant à un virage à droite si cet écart de route est négatif. Si cet écart de route est nul, ce qui signifie que l'angle de route tangente $\theta_T$ correspond à l'angle de route initiale $\theta_I$, la trajectoire prévue ne comprend pas de virage initial de ralliement.

Dans le cas où le cercle de ralliement R1 a été choisi, et où ce cercle intercepte la route $r_F$, mais pas le cercle C2, et où le point initial I se trouve en amont du point final F, compte tenu du sens de la route finale $r_F$ (étape 22), on remet en cause le choix du cercle capture C1 pour sélectionner le cercle C2 (étape 23), comme cela est illustré sur la figure 3e.

Une fois que les cercles de virage de ralliement et de capture sont déterminés, le procédé fait appel à des calculs tout à fait classiques et simples de détermination des points de tangence de la tangente à deux cercles orientés, pour finalement obtenir une trajectoire exécutable par un dispositif de pilotage automatique.

Dans la description qui précède, le procédé selon l'invention ne fait appel qu'à un seul calcul d'arctangente qui est coûteux en puissance de calcul, et ce uniquement dans le cas où le point initial I ne se trouve pas dans le cercle de capture C1 et où le cercle de ralliement R2 n'intercepte pas celui-ci. Ce procédé permet donc de réduire les cas où la fonction arctangente doit être utilisée.

**Revendications**

1. Procédé de routage horizontal d'un aéronef entre deux points de passage obligés (I, F) respectant des contraintes imposées par des consignes de rayon de virage et par des consignes d'orientation en route ou cap (rI, rF) à tenir aux points de passage obligés (I, F) définissant une trajectoire formée de deux arcs de cercles reliés par un segment de droite **caractérisé en ce qu'**il consiste :

   à déterminer deux cercles, dits de ralliement (R1, R2), tangents au point de passage obligé de départ dit point initial (I) selon la direction de la consigne d'orientation en route ou cap, dite sens de la route initiale (rI), orientés selon cette direction (rI), donc avec des sens de parcours inverses, et ayant un rayon correspondant à la consigne de rayon de virage au point initial (I),

   à déterminer deux cercles, dits de capture (C1, C2), tangents au point de passage obligé d'arrivée dit point final (F) selon la direction de consigne d'orientation en route ou cap final, dite sens de la route finale (rF), orientés selon cette direction (rF), donc avec des sens de parcours inverses, et ayant un rayon correspondant à la consigne de rayon de virage au point final (F),

   à repérer celui (C1 ou C2) des deux cercles de captures, dit premier cercle de capture, qui est situé du même côté de la route partant du point final (F) et orientée selon la consigne d'orientation en route (rF) à tenir au point final (F), dite route finale, que le point initial (I),

   à sélectionner l'un (R1 ou R2) des cercles de ralliement et l'un (C1 ou C2) des cercles de capture comme supports de la trajectoire en fonction de la position du point initial (I) par rapport au premier cercle de capture (C1),

   à définir une trajectoire comportant trois portions :

   une première portion constituée d'un virage circulaire initial de ralliement de la direction générale du point final (F), entamé en partant du point initial (I) avec la direction de la consigne d'orientation de route initiale (rI) et poursuivie en décrivant une partie du contour du cercle de ralliement sélectionné (R1, R2) en respectant son sens de parcours,

   une deuxième portion constituée d'une ligne droite de ralliement à route constante suivant une tangente au cercle de ralliement sélectionné (R1 ou R2) pour le virage circulaire initial et au cercle de capture sélectionné (C1, C2), la dite tangente étant orientée en direction du point final (F) et dans le sens de chacun des cercles (R1 ou R2 et C1 ou C2) aux points de tangence,

   une troisième portion constituée d'un virage circulaire de capture final empruntant le contour du cercle de capture sélectionné (C1, C2) atteint en fin de la ligne droite de ralliement, en respectant son sens de parcours, jusqu'au point final (F) atteint avec la direction de consigne de la route finale (rF), et

   - à faire suivre par l'aéronef la trajectoire ainsi définie.

2. Procédé selon la revendication 1,
   **caractérisé en ce qu'**il applique la convention selon laquelle le premier cercle de ralliement (R1) est celui qui a le même sens de parcours que le premier cercle de capture (C1).

3. Procédé selon la revendication 2,
   **caractérisé en ce qu'**il comprend la sélection (12) du premier cercle de ralliement (R1) si le point initial (I) se trouve (11) dans le premier cercle de capture (C1), et la sélection (15) du premier cercle de capture (C1) si en outre le premier cercle de ralliement (R1) n'intercepte pas (13) la route finale (rF) passant par le point final (F), ou intercepte (14) le second cercle de capture (C2), et la sélection (16) du second cercle de capture (C2) si le premier cercle de ralliement (R1) intercepte (13) la route finale (rF), mais pas (14) le second cercle de capture (C2).

4. Procédé selon la revendication 2 ou 3,
   **caractérisé en ce qu'**il comprend la sélection (17) a priori du premier cercle de capture (C1) si le point initial (I) ne se trouve pas (11) dans le premier cercle de capture (C1).

5. Procédé selon l'une des revendications 2 à 4,
   **caractérisé en ce qu'**il comprend la sélection (21) du premier cercle de ralliement (R1) et du premier cercle de capture (C1) si la condition suivante est remplie :

   le point initial (I) ne se trouve (11) pas dans le premier cercle de capture (C1), et
   le second cercle de ralliement (R2) intercepte (18) le premier cercle de capture (C1).

6. Procédé selon l'une des revendications 2 à 5,
   **caractérisé en ce que** si le point initial (I) ne se trouve pas (11) dans le premier cercle de capture (C1), et le second cercle de ralliement (R2) n'intercepte pas (18) le premier cercle de capture (C1), il comprend la sélection (20, 21) du cercle de ralliement (R) en fonction de la route initiale (rI) et de la route dirigée suivant la tangente (T1) au premier cercle de capture (C1), passant par le point initial (I).

7. Procédé selon la revendication 6,
   **caractérisé en ce qu'**il comprend la détermination (19) du signe de l'écart de route ($\Theta_I$ - $\Theta_F$ ) entre la route tangente (T1) au premier cercle de capture (C1), passant par le point initial (I) et la route initiale (rI), les valeurs d'angle de route étant considérées entre 180° et +180°, et

   - si cet écart de route est positif, il comprend la sélection (20, 21) du cercle de ralliement (R) correspondant à un virage à gauche,
   - si cet écart de route est négatif, il comprend la sélection du cercle de ralliement correspondant à un virage à droite, et
   - si cet écart de route est nul, la trajectoire à calculer ne comprend pas virage initial de ralliement.

8. Procédé selon l'une des revendications 2 à 7,
   **caractérisé en ce que** si la condition suivante est remplie :

   - le point initial (I) se trouve en amont du point final (F), en dehors du premier cercle de capture (C1), et
   - le premier cercle de ralliement (R1) intercepte la route finale (rF), mais pas le second cercle de capture (C2),

   il comprend la sélection (21, 23) du premier cercle de ralliement (R1) et du second cercle de capture (C2), ou la sélection (20, 17) du second cercle de ralliement (R2) et du premier cercle de capture (C1).

9. Procédé selon la revendication 8,
   **caractérisé en ce que**, si en outre le premier cercle de ralliement (R1) a été précédemment sélectionné (18, 19), il comprend la sélection (23) du second cercle de capture (C2), sinon, il comprend la sélection (20, 17) du second cercle de ralliement (R2) et du premier cercle de capture (C1).

**Patentansprüche**

1. Verfahren zur horizontalen Leitweglenkung eines Flugzeuges zwischen zwei verpflichteten Punkten (I, F) unter Einhaltung der durch Kurvenradiusvorgaben und Streckenorientierungs- oder Kursvorgaben (rI, rF) aufgestellten Bedingungen, die an den verpflichteten Punkten (I, F) zu berücksichtigen sind, wobei eine Bahn definiert wird, die von zwei Kreisbögen gebildet ist, die durch ein Geradensegment verbunden sind, **dadurch gekennzeichnet, dass** es darin besteht:

   zwei so genannte Zielkreise (R1, R2) zu bestimmen, die den verpflichteten Ausgangspunkt, Anfangspunkt (I) genannt, entlang der Richtung der Streckenorientierungs- oder Kursvorgabe, Anfangsstreckenrichtung (rI) genannt, tangieren und entlang dieser Richtung (rI), somit mit umgekehrten Wegrichtungen ausgerichtet sind und einen Radius aufweisen, der der Kurvenradiusvorgabe am Anfangspunkt (I) entspricht,
   zwei so genannte Einfangkreise (C1, C2) zu bestimmen, die den verpflichteten Ankunftspunkt, Endpunkt (F) genannt, entlang der Richtung der endgültigen Streckenorientierungs- oder Kursvorgabe, Endstreckenrichtung (rF) genannt, tangieren und entlang dieser Richtung (rF), somit mit umgekehrten Wegrichtungen ausgerichtet sind und einen Radius aufweisen, der der Kurvenradiusvorgabe am Endpunkt (F) entspricht, jenen der beiden Einfangkreise (C1 oder C2), erster Einfangkreis genannt, zu erfassen, der sich auf derselben Seite der Strecke wie der Anfangspunkt (I) befindet, die vom Endpunkt (F) ausgeht und entlang der Streckenorientierungsvorgabe (rF), die am Endpunkt (F) einzuhalten ist, Endstrecke genannt, ausgerichtet ist, einen der Zielkreise (R1 oder R2) und einen der Einfangkreise (C1 oder C2) als Träger der Bahn in Abhängigkeit von der Position des Anfangspunktes (I) in Bezug auf den ersten Einfangkreis (C1) auszuwählen, eine Bahn zu definieren, die drei Abschnitte umfasst:

einen ersten Abschnitt, der von einer kreisförmigen Anfangszielkurve der allgemeinen Richtung des Endpunktes (F) gebildet ist, die ausgehend vom Anfangspunkt (I) mit der Richtung der Anfangsstreckenorientierungsvorgabe (rI) eingeschlagen wird, und der unter Beschreibung eines Teils der Kontur des gewählten Zielkreises (R1, R2) unter Einhaltung seiner Wegrichtung weiterverfolgt wird, einen zweiten Abschnitt, der von einer geraden Ziellinie mit konstanter Strecke entlang einer Tangente an den gewählten Zielkreis (R1 oder R2) für die kreisförmige Anfangskurve und an den gewählten Einfangkreis (C1, C2) gebildet ist, wobei die Tangente in Richtung des Endpunktes (F) und in die Richtung jedes der Kreise (R1 oder R2 und C1 oder C2) an den Tangierungspunkten ausgerichtet ist, einen dritten Abschnitt, der von einer kreisförmigen Endeinfangkurve gebildet ist, die die Kontur des gewählten Einfangkreises (C1, C2), der am Ende der geraden Ziellinie unter Einhaltung seiner Wegrichtung erreicht wird, bis zum Endpunkt (F), der mit der Vorgaberichtung der Endstrecke (rF) erreicht wird, übernimmt, und das Flugzeug diese so definierte Bahn verfolgen zu lassen.

2. Verfahren nach Anspruch 1,
**dadurch gekennzeichnet, dass** es das Übereinkommen anwendet, nach dem der erste Zielkreis (R1) jener ist, der dieselbe Wegrichtung wie der erste Einfangkreis (C1) hat.

3. Verfahren nach Anspruch 2,
**dadurch gekennzeichnet, dass** es die Wahl (12) des ersten Zielkreises (R1) , wenn sich der Anfangspunkt (I) in dem ersten Einfangkreis (C1) befindet (11), und die Wahl (15) des ersten Einfangkreises (C1), wenn ferner der erste Zielkreis (R1) nicht die Endstrecke (rF) schneidet (13), die durch den Endpunkt (F) verläuft, oder den zweiten Einfangkreis (C2) schneidet (14), und die Wahl (16) des zweiten Einfangkreises (C2) umfasst, wenn der erste Zielkreis (R1) die Endstrecke (rF) schneidet (13), aber nicht den zweiten Einfangkreis (C2) schneidet (14).

4. Verfahren nach Anspruch 2 oder 3,
**dadurch gekennzeichnet, dass** es die Wahl (17) des ersten Einfangkreises (C1) a priori umfasst, wenn sich der Anfangspunkt (I) nicht in dem ersten Einfangkreis (C1) befindet (11).

5. Verfahren nach einem der Ansprüche 2 bis 4,
**dadurch gekennzeichnet, dass** es die Wahl (21) des ersten Zielkreises (R1) und des ersten Einfangkreises (C1) umfasst, wenn die folgende Bedingung erfüllt ist:

der Anfangspunkt (I) befindet (11) sich nicht in dem ersten Einfangkreis (C1), und
der zweite Zielkreis (R2) schneidet (18) den ersten Einfangkreis (C1).

6. Verfahren nach einem der Ansprüche 2 bis 5,
**dadurch gekennzeichnet, dass**, wenn sich der Anfangspunkt (I) nicht in dem ersten Einfangkreis (C1) befindet (11) und der zweite Zielkreis (R2) nicht den ersten Einfangkreis (C1) schneidet (18), es die Wahl (20, 21) des Zielkreises (R) in Abhängigkeit von der Anfangsstrecke (rI) und der entlang der durch den Anfangspunkt (I) verlaufenden Tangente (T1) an den ersten Einfangkreis (C1) ausgerichteten Strecke umfasst.

7. Verfahren nach Anspruch 6,
**dadurch gekennzeichnet, dass** es die Bestimmung (19) des Streckenabstandes ($\theta_I - \theta_F$) zwischen der durch den Anfangspunkt (I) verlaufenden, den ersten Einfangkreis (C1) tangierenden Strecke (T1) und der Anfangsstrecke (rI) umfasst, wobei die Streckenwinkelwerte zwischen -180° und +180° angenommen werden, und

- wenn dieser Streckenabstand positiv ist, es die Wahl (20, 21) des Zielkreises (R), der einer Linkskurve entspricht, umfasst,

- wenn dieser Streckenabstand negativ ist, es die Wahl des einer Rechtskurve entsprechenden Zielkreises umfasst, und
- wenn dieser Streckenabstand gleich Null ist, die zu berechnende Bahn keine Anfangszielkurve umfasst.

**8.** Verfahren nach einem der Ansprüche 2 bis 7,
**dadurch gekennzeichnet, dass**, wenn folgende Bedingung erfüllt ist:

- der Anfangspunkt (I) befindet sich stromaufwärts zum Endpunkt (F) außerhalb des ersten Einfangkreises (C1), und
- der erste Zielkreis (R1) schneidet die Endstrecke (rF), aber nicht den zweiten Einfangkreis (C2),

es die Wahl (21, 23) des ersten Zielkreises (R1) und des zweiten Einfangkreises (C2) oder die Wahl (20, 17) des zweiten Zielkreises (R2) und des ersten Einfangkreises (C1) umfasst.

**9.** Verfahren nach Anspruch 8,
**dadurch gekennzeichnet, dass**, wenn ferner der erste Zielkreis (R1) vorher gewählt (18, 19) wurde, es die Wahl (23) des zweiten Einfangkreises (C2) umfasst, andernfalls es die Wahl (20, 17) des zweiten Zielkreises (R2) und des ersten Einfangkreises (C1) umfasst.

**Claims**

**1.** Method of horizontal routing of an aircraft between two waypoints (I, F) complying with constraints imposed by turning radius instructions and by orientation instructions for the route or course (rI, rF) to be maintained at the waypoints (I, F) defining a trajectory formed of two arcs of circles connected by a straight segment **characterized in that** it consists:

in determining two so-called homing circles (R1, R2) that are tangential at the starting waypoint, the so-called initial point (I), along the direction of the course or route orientation instruction, the so-called sense of the initial route (rI), and are oriented along this direction (rI), hence with opposite senses of travel, and having a radius corresponding to the turning radius instruction at the initial point (I),
in determining two so-called capture circles (C1, C2) that are tangential at the arrival waypoint, the so-called final point (F), along the direction of orientation instruction for the final route or course, the so-called sense of the final route (rF), and are oriented along this direction (rF), hence with opposite senses of travel, and having a radius corresponding to the turning radius instruction at the final point (F),
in tagging that one (C1 or C2) of the two capture circles, the so-called first capture circle, which is situated on the same side of the route that leaves the final point (F) and is oriented along the orientation instruction of the route (rF) to be maintained at the final point (F), the so-called final route, as the initial point (I),
in selecting one (R1 or R2) of the homing circles and one (C1 or C2) of the capture circles as supports of the trajectory as a function of the position of the initial point (I) with respect to the first capture circle (C1),
in defining a trajectory comprising three portions:

a first portion consisting of an initial circular homing turn of the general direction of the final point (F), commenced starting from the initial point (I) with the direction of the orientation instruction of the initial route (rI) and continued by describing a part of the contour of the selected homing circle (R1, R2) while complying with its sense of travel,
a second portion consisting of a constant-route straight homing line following a tangent to the selected homing circle (R1 or R2) for the initial circular turn and to the selected capture circle (C1, C2), the said tangent being oriented in the direction of the final point (F) and in the sense of each of the circles (R1 or R2 and C1 or C2) at the points of tangency,
a third portion consisting of a final circular capture turn adopting the contour of the selected capture circle (C1, C2) reached at the end of the straight homing line, while complying with its sense of travel, up to the final point (F) reached with the instruction direction of the final route (rF), and

- in making the aircraft follow the trajectory thus defined.

**2.** Method according to Claim 1,

**characterized in that** it applies the convention according to which the first homing circle (R1) is that which has the same sense of travel as the first capture circle (C1) .

3. Method according to Claim 2,
**characterized in that** it comprises the selection (12) of the first homing circle (R1) if the initial point (I) lies (11) in the first capture circle (C1), and the selection (15) of the first capture circle (C1) if moreover the first homing circle (R1) does not intercept (13) the final route (rF) passing through the final point (F), or intercepts (14) the second capture circle (C2), and the selection (16) of the second capture circle (C2) if the first homing circle (R1) intercepts (13) the final route (rF), but not (14) the second capture circle (C2).

4. Method according to Claim 2 or 3,
**characterized in that** it comprises the a priori selection (17) of the first capture circle (C1) if the initial point (I) does not lie (11) in the first capture circle (C1).

5. Method according to one of Claims 2 to 4,
**characterized in that** it comprises the selection (21) of the first homing circle (R1) and of the first capture circle (C1) if the following condition is fulfilled:

the initial point (I) does not lie (11) in the first capture circle (C1), and
the second homing circle (R2) intercepts (18) the first capture circle (C1).

6. Method according to one of Claims 2 to 5,
**characterized in that** if the initial point (I) does not lie (11) in the first capture circle (C1), and the second homing circle (R2) does not intercept (18) the first capture circle (C1), it comprises the selection (20, 21) of the homing circle (R) as a function of the initial route (rI) and of the route directed along the tangent (T1) to the first capture circle (C1), passing through the initial point (I).

7. Method according to Claim 6,
**characterized in that** it comprises the determination (19) of the sign of the route deviation $(\Theta_I - \Theta_F)$ between the tangent route (T1) to the first capture circle (C1), passing through the initial point (I) and the initial route (rI), the values of route angle being considered between -180° and +180°, and

- if this route deviation is positive, it comprises the selection (20, 21) of the homing circle (R) corresponding to a left-hand turn,
- if this route deviation is negative, it comprises the selection of the homing circle corresponding to a right-hand turn, and
- if this route deviation is zero, the trajectory to be calculated does not comprise an initial homing turn.

8. Method according to one of Claims 2 to 7,
**characterized in that** if the following condition is fulfilled:

- the initial point (I) lies upstream of the final point (F), outside of the first capture circle (C1), and
- the first homing circle (R1) intercepts the final route (rF), but not the second capture circle (C2),

it comprises the selection (21, 23) of the first homing circle (R1) and of the second capture circle (C2), or the selection (20, 17) of the second homing circle (R2) and of the first capture circle (C1).

9. Method according to Claim 8,
**characterized in that**, if moreover the first homing circle (R1) has been previously selected (18, 19), it comprises the selection (23) of the second capture circle (C2), otherwise, it comprises the selection (20, 17) of the second homing circle (R2) and of the first capture circle (C1).

FIG. 1

FIG. 2

FIG. 3a    FIG. 3b    FIG. 3c

FIG. 3d    FIG. 3e

FIG. 3f

FIG. 3g

FIG. 3h

FIG. 3i

FIG. 4

avec :

$\in$ : est situé dans
$\cap$ : intercepte
$\varnothing$ : n'intercepte pas
$<$ : est en amont de